(19) Europäisches Patentamt
European Patent Office
Office européen des brevets

(11) Publication number: **0 097 646 B1**

(12) # EUROPEAN PATENT SPECIFICATION

(45) Date of publication of patent specification: **31.08.88**

(51) Int. Cl.$^4$: **C 25 B 1/16**, C 25 B 9/00, C 25 B 13/08

(21) Application number: **82900711.1**

(22) Date of filing: **15.01.82**

(86) International application number: **PCT/US82/00041**

(87) International publication number: **WO 83/02462 21.07.83 Gazette 83/17**

(54) **COEXTRUDED MULTILAYER CATION EXCHANGE MEMBRANES.**

(30) Priority: **04.01.82 US 336849**

(43) Date of publication of application: **11.01.84 Bulletin 84/02**

(45) Publication of the grant of the patent: **31.08.88 Bulletin 88/35**

(84) Designated Contracting States: **BE DE FR GB LU NL**

(56) References cited:
EP-A-0 041 734
EP-A-0 093 114
US-A-4 062 753
US-A-4 090 931
US-A-4 165 248
US-A-4 176 215
US-A-4 206 022
US-A-4 225 400
US-A-4 253 900
US-A 4 253 923

**No relevant documents have been disclosed**

(73) Proprietor: **E.I. DU PONT DE NEMOURS AND COMPANY**
**1007 Market Street**
**Wilmington Delaware 19898 (US)**

(72) Inventor: **SMITH, Roger Alton**
**5 Hilltop Road RFD 3**
**Kennett Square PA 19348 (US)**
Inventor: **WITHERS, Michael Somerville**
**Rd 1 Box 117**
**Landenberg PA 19350 (US)**

(74) Representative: **Abitz, Walter, Dr.-Ing. et al**
**Abitz, Morf, Gritschneder, Freiherr von Wittgenstein Postfach 86 01 09**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 097 646 B1

## Description

Background of the invention

Fluorinated polymers containing pendant side chains are often used to prepare ion exchange membranes. Such membranes have outstanding properties as barrier membranes to separate the anode and cathode compartments of electrolytic cells used for the production of chlorine and caustic.

Fluorinated polymers containing carboxyl side chains provide excellent current efficiency in such electrolytic cells, but result in high operating voltages. By contrast, fluorinated polymers containing sulfonyl groups in the side chains permit operation at low voltages, but result in poor current efficiency in the electrolytic cell.

It has previously been recognized that combinations of polymers having sulfonyl and carboxyl groups or combinations of polymers having different equivalent weights are desirable to provide an optimum balance of performance characteristics in an electrolytic cell using membranes prepared from such polymers. Under normal cell operation, the water permeation characteristics of the layers are sufficiently close that the layers remain in intimate contact with each other. However, abnormal cell conditions, such as loss of electrical power, failure of water feed to the cathode chamber and particularly interruption or loss of brine feed to the cell, can produce a large difference in water transport. For example, if the anolyte is depleted below 50 g/l NaCl, a large quantity of water will be transported through a fluorinated polymer having a sulfonyl side chains. However, the water is substantially less able to permeate a polymer having carboxyl-containing side chains. Thus, during an upset of cell operation, a composite of two such polymers may experience a buildup of water at the interface, resulting in delamination of the composite.

EP—A—41 734 is concerned with a fluorinated polymeric composite ion exchange membrane which comprises at least two layers wherein the ion exchange functional groups may be the same or different. Composite membranes can be formed by co-extrusion of the two layers. When the first layer contains carboxylic acid ion exchange groups and the second layer contains sulfonyl ion exchange groups, at least one layer has an equivalent weight of less than 1000.

Summary of the invention

The instant invention provides a process for the preparation of multilayer cation exchange membranes exhibiting improved resistance to delamination in an electrolytic cell and a process for the production of such composite membranes by coextrusion, further a process for the continuous production of alkali metal hydroxide, and further an electrolytical cell. The enential feature of the invention are set forth in independent Claims 1, 7 and 8. Preferred features are the subject of the dependent claims.

Specifically, the instant invention provides a process for the preparation of a multilayer cation exchange membrane by heating at least two substantially incompatible melt-fabricable fluorinated polymers having pendant side chains containing functional groups selected from sulfonyl and carboxyl to a temperature above the melting point of the polymers, bringing the molten polymers into contact while each is at a temperature above the melting point of the polymer, coextruding the polymers into a composite film, cooling the resulting composite to a temperature below the melting points of each of the films, and subsequently converting the functional groups to ionizable functional groups.

Detailed description of the invention

The melt-fabricable polymers used in the instant invention are of the types generally used previously in the preparation of films or reinforced laminates for use in electrochemical cells, and especially chloralkali cells. These include fluorinated polymers with pendant side chains containing sulfonyl groups, carboxyl groups, or both.

The melt-fabricable polymer having sulfonyl functional groups has a fluorinated hydrocarbon backbone chain to which are attached functional groups or pendant side chains bearing the functional groups. The pendant side chains can contain, for example,

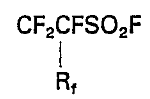

groups wherein $R_f$ is F, Cl, or a $C_1$ to $C_{10}$ perfluoralkyl radical. Fluorinated polymers of this type and their preparation are described in detail in United States Patents 3,282,875, 3,560,568, 3,718,627, and 3,041,317, all of which are hereby incorporated by reference. For chlor-alkali cells, perfluorinated polymers are preferred.

The melt-fabricable polymer having carboxylic functional groups has a fluorinated hydrocarbon backbone chain to which are attached the functional groups or pendant side chains which in turn carry the functional groups. The pendant side chains can contain, for example,

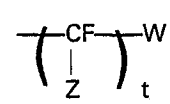

groups wherein Z is F or $CF_3$, t is 1 to 12 and preferably 1 to 3, and W is —COOR or —CN, wherein R is lower alkyl. Preferably, the functional group in the side chains of the polymer will be present in terminal

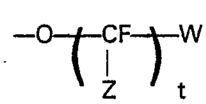

groups. Such fluorinated polymers containing carboxylic functional groups and their preparation are disclosed in British Patent 1,145,445 and United States Patent 3,506,635 and 4,116,888, all hereby incorporated by reference. Preferred monomers for use in the preparation of such polymers are found in United States Patents 4,131,740 and 3,852,326, also hereby incorporated by reference. For chlor-alkali cells, perfluorinated polymers are preferred.

The particular polymers used in the present invention are substantially incompatible. Substantially incompatible polymers are those which, after blending above the melting point of each polymer, separate into distinct phases on cooling to room temperature. Thus, the polymers used to form the component layers in the present invention can include one membrane having carboxylic functional groups and another membrane having sulfonyl functional groups. Alternatively, two polymers having similar chemical composition, for example, both polymers being characterized by sulfonyl groups, but substantially incompatible due to variation in equivalent weight, can also be used in accordance with the present invention.

Polymers used in the present invention having sulfonyl groups exhibit an equivalent weight of from 1000 to 1200. In the event that two fluorinated polymers having sulfonyl functional groups are used, the equivalent weight of the polymers should differ by at least about 200 to realize the required degree of incompatibility.

The polymers having carboxylic functional groups exhibit an equivalent weight of from 1,050 to 1,150.

Each of the melt fabricable resins used should be uniform or well-blended. The carboxylate resin should be protected from atmospheric moisture prior to coextrusion to prevent hydrolysis.

In accordance with the present invention, the final product contains at least two layers, and preferably two or three layers. The total thickness of the final product of the present invention can be about from 25 to 250 µm. Particularly good balance of cell voltage and durability in a chlor-alkali cell is realized with a total thickness of 75 to 150 µm and this composite thickness is accordingly preferred. Each component of a laminate of the present invention should comprise at least about 5% of the total thickness of a composite. In general, in a two component laminate prepared from polymers having carboxylic and sulfonic functional groups, respectively, the carboxyl containing polymer preferably comprises about from 15 to 33% of the total thickness of the composite.

The present laminar structures are prepared by coextruding the polymers above the melting point of each polymer. A wide variety of mechanical variations can be used, including commercially available coextrusion equipment such as that manufactured by Johnson Plastics Machinery Company of Chippewa Falls, Wisconsin. For example, the laminates can be prepared using multiple extruders feeding into separate zones of a common chamber, following which the layered stream is fed to a single die. Another embodiment of the present invention involves the use of a single die known in the film processing industry as a "coat hanger" die. In the use of such a die, multiple extruders feed separate streams into the specialized die. The die expands the width of the streams and joins the two streams before they leave a single exit orifice of the die.

Within the requirement that the polymers be above the melting point, the particular processing temperature will depend on known operational requirements for extrusion of films. The temperature will be adjusted to obtain continuous smooth films of uniform caliper without die drips or other defects. Using the sulfonyl-containing and carboxyl-containing polymers of the present invention, an extrusion temperature range of about from 260° to 330°C is preferred.

After coextrusion of the laminates, they are cooled to a temperature below the melting point of each polymer and treated according to known techniques to convert the functional groups to forms more suitable for use in electrolytic cell applications. Such conversion also renders the polymers substantially less melt-fabricable.

A reinforcing layer is generally also added to the composite structure. A wide variety of support materials can be used, including woven fabric or nonwoven material. In the case of woven fabric, weaves such as ordinary basket weave and leno weave can be used. The reinforcement threads can be either monofilament or multistranded.

Particularly preferred reinforcement materials are perhalocarbon polymer threads optionally in conjunction with sacrificial fibers which are dissolved by caustic or destroyed by oxidizing agents. As used herein, the term "perhalocarbon polymer" means a polymer which has a carbon chain optionally containing ether linkages and which is totally substituted by fluorine or by fluorine and chlorine atoms. Particularly preferred because of its inert character is a perfluorocarbon polymer. Typical of such polymers are those made from tetrafluoroethylene and copolymers of tetrafluoroethylene with hexafluoropropylene and/or perfluoro(alkyl vinyl ethers) wherein alkyl is from 1 to 10 carbon atoms. A preferred ether of this type is perfluoro(propyl vinyl ether).

The reinforcing material is conveniently applied to the sulfonyl-containing polymer in conjunction with another sulfonyl-containing polymer of the same equivalent weight. These two sulfonyl-containing polymers are then laminated, with the reinforcing material embedded in the composite layer of sulfonyl-containing polymer.

The laminar structures of the present invention are particularly useful as membranes for chlor-alkali electrolytic cells. Among the cells in which these laminar structures can be used are narrow-gap cells, in which the gap between anode and cathode is no greater than about 3 mm and the laminar structure is in contact with at least one of the anode and cathode. Such arrangements minimize the resistance contributed by the

anolyte and catholyte, thus providing for operation at low voltage. The membranes of this invention can also be used in a solid polymer electrolyte or composite electrode/membrane arrangement, in which a thin porous anode and/or porous cathode are attached directly to the membrane surface, and rigid current collectors can also be used in contact with these electrodes.

In any of the above arrangements, either or both of the electrodes can have a catalytically active surface layer of the type known in the art for lowering the overvoltage of an electrode. Such electrocatalyst can be of a type known in the art, such as those described in U.S. Patents 4,224,121 and 3,134,697, and published UK Patent Application GB 2,009,788A. Preferred cathodic electrocatalysts include platinum black, Raney nickel and ruthenium black. Preferred anodic electrocatalysts include platinum black and mixed ruthenium and iridium oxides.

The membranes described herein can also be modified on either surface or both surfaces thereof so as to have enhanced gas release properties, for example by providing optimum surface roughness or smoothness, or, preferably, by providing thereon a gas- and liquid-permeable porous non-electrode layer. Such non-electrode layer can be in the form of a thin hydrophilic coating or spacer and is ordinarily of an inert electroinactive or non-electrocatalytic substance. Such non-electrode layer should have a porosity of 10 to 99%, preferably 30 to 70%, and an average pore diameter of 0.01 to 2000 μm, preferably 0.1 to 1000 μm and a thickness generally in the range of 0.1 to 500 μm preferably 1 to 300 μm. A non-electrode layer ordinarily comprises an inorganic component and a binder; the inorganic component can be of a type as set forth in published UK Patent Application GB 2,064,586A, preferably tin oxide, titanium oxide, zirconium oxide, or an iron oxide such as $Fe_2O_3$ or $Fe_3O_4$. Other information regarding non-electrode layers on ion-exchange membranes is found in published European Patent Application 0,031,660, and in Japanese Published Patent Applications 56-108888 and 56-112487.

The binder component in a non-electrode layer, and in an electrocatalyst composition layer, can be, for example, polytetrafluoroethylene, a fluorocarbon polymer at least the surface of which is hydrophilic by virtue of treatment with ionizing radiation in air or a modifying agent to introduce functional groups such as —COOH or —$SO_3H$ (as described in published UK Patent Application GB 2,060,703A) or treatment with an agent such as sodium in liquid ammonia, a functionally substituted fluorocarbon polymer or copolymer which has carboxylate or sulfonate functional groups, or polytetrafluoroethylene particles modified on their surfaces with fluorinated copolymer having acid type functional groups (GB 2,064,586A). Such binder can be used in an amount of about from 10 to 50% by wt. of the non-electrode layer or of the electrocatalyst composition layer.

Composite structures having non-electrode layers and/or electrocatalyst composition layers thereon can be made by various techniques known in the art, which include preparation of a decal which is then pressed onto the membrane surface, application of a slurry in a liquid composition (e.g., dispersion or solution) of the binder followed by drying, screen or gravure printing of compositions in paste form, hot pressing of powders distributed on the membrane surface, and other methods as set forth in GB 2,064,586A. Such structures can be made by applying the indicated layers onto membranes in melt-fabricable form, and by some of the methods onto membranes in ion-exchange form; the polymeric component of the resulting structures when in melt-fabricable form can be hydrolyzed in known manner to the ion-exchange form.

Non-electrode layers and electrocatalyst composition layers can be used in combination in various ways on a membrane. For example, a surface of a membrane can be modified with a non-electrode layer, and an electrocatalyst composition layer disposed over the latter. It is also possible to place on a membrane a layer containing both an electrocatalyst and a conductive non-electrode material, e.g. a metal powder which has a higher overvoltage than the electrocatalyst, combined into a single layer with a binder. One preferred type of membrane is that which carries a cathodic electrocatalyst composition on one surface thereof, and a non-electrode layer on the opposite surface thereof.

Membranes which carry thereon one or more electrocatalyst layers, or one or more non-electrode layers, or combinations thereof, can be employed in an electrochemical cell in a narrow-gap or zero-gap configuration as described above.

In chloralkali electrolytic cells, the present membranes show outstanding resistance to damage or delamination, particularly in non-standard cell operating conditions. Moreover, the laminates show particular resistance to delamination or separation of the layers when the salt in the anolyte is depleted below 50 gpl. The present laminar structures also show increased storage life and permit the efficient preparation of laminates with a low frequency of defects.

The present invention is further illustrated in the following specific examples.

Example 1

A two-component laminar structure was prepared using an apparatus consisting of three single barrel screw extruders, two of which were used in this preparation, coupled with heated transfer lines to a common chamber where the polymer streams met. The combined polymer stream was transferred from the common chamber through another heated transfer line to a six-inch (15.2 cm) slit die.

One extruder of this apparatus, having a one inch diameter barrel, was charged with cubes of a

copolymer of tetrafluoroethylene (TFE) and methyl perfluoro(4,7 - dioxa - 5 - methyl - 8 - noneate) (EVE) having an equivalent weight of 1,037 and melt flow of 25.5 at 270°C. The extruder was operated at 20 rpm with a barrel discharge temperature of 278°C.

The hopper to a second extruder, which had a 31.75 mm (1 1/4") diameter barrel, was charged with cubes of a copolymer of tetrafluoroethylene (TFE) and perfluoro(3,6 - dioxa - 4 - methyl - 7 - octenesulfonyl fluoride) (PSEPVE) having an equivalent weight of 1,090 and a melt flow of 31.4 at 250°C. This extruder was operated at 11 rpm with a barrel discharge temperature of 288°C. The common chamber and die temperatures were maintained at 277°C.

A coextruded two-layered film was produced at the rate of 2.5 cm/sec (5 ft/min). The total thickness of the coextruded film varied from 127 to 178 μm.

A piece of this film was hydrolyzed in a bath containing 30% dimethylsulfoxide (DMSO) and 11% potassium hydroxide for 20 minutes at 90°C. The film was rinsed and dried. Microtomed cross-sections were prepared across the width of the film, stained with Malachite green, and the relative thickness of the layers measured with a microscope.

The layer containing the carboxylic copolymer was continuous across the width of the extruded film and its thickness was 18% of the total.

A sample of the hydrolyzed double layered film was mounted in a chloralkali cell having an active area of 45 $cm^2$ between a dimensionally stable anode and a mild steel expanded metal cathode. The cell was operated at 80°C with current of 3.1 $KA/m^2$. The anolyte salt content was held at 200 gpl. Water was added to the anolyte to maintain the concentration of caustic produced at 32±1%. After 5 days of operation, the cell was operating at 95.1% current efficiency and 3.68 volts. On the fifth day of the membrane was subjected to a simulated failure of the brine feed. The brine was shut off to the cell while electrical power, water to the catholyte and temperature control were maintained. After 5 hours of continued operation, the anode chamber was half empty and the residual analyte contained only 1—2% NaCl and the cell voltage had increased to 5.0 volts. The cell was then shut down, disassembled, and the membrane was inspected. The membrane was in perfect condition with no evidence of separation of the layers.

Example 2

The extrusion conditions of Example 1 were repeated except that the speed of the first extruder was reduced to 10 rpm. A coextruded two-layered film was produced at the rate of 2.5 cm/sec (5 ft/min). The total thickness of the coextruded film varied from 100 to 152 μm.

A sample of this film was hydrolyzed and examined microscopically as in Example 1. The layer containing the carboxylic polymer was continuous across the width of the extruded film and its thickness averaged 9% of the total thickness of the film.

A sample of the hydrolyzed film was mounted in a laboratory cell with the side containing the carboxylic polymer toward the cathode. After 5 days of operation, it was performing at 94.9% current efficiency and 3.65 volts. The membrane was subject to a simulated failure of the brine feed as in Example 1. Upon inspection and examination, the membrane was in perfect condition with no evidence of blistering.

Comparative Example A

A film was extruded from the TFE/PSEPVE copolymer used in Example 1, except that the polymer had an equivalent weight of 1100 and gave a film with a thickness of 100 microns. A quantity of TFE/EVE copolymer of 1080 equivalent weight was extruded separately to yield a film of 50 μm thickness. A sample of each of these films was then pressed together to exclude air between the layers and thermally bonded by passing through a thermal laminator supported on a continuous web of a porous release paper through which vacuum was applied. The temperature of the laminator was controlled so that the temperature of the laminate reached 230—235°C at the end of the heated zone.

This thermally bonded double layer film was then hydrolyzed and tested in a laboratory cell as in Example 1. After a similar period of 5 days, the membrane was performing at 97.5% current efficiency and 3.61 volts, producing 32±1% NaOH. The cell was operated for a total of 12 days, at which time the membrane was subjected to a simulated failure of the brine feed system as in Example 1. Upon cell disassembly and inspection of the membrane, it was found to be extensively blistered. Approximately 75% of the area in the active area of the cell was covered with liquid-filled pockets or blisters. The separations had occurred at the interface of the TFE/PSEPVE and the TFE/EVE layers.

Example 3

A portion of the double layered film from Example 1 in the unhydrolyzed state was laid on top of an open weave fabric prepared from monofilaments of a melt-extrudable perfluorocarbon resin (PFA). Below the cloth was placed a 50 micron film of TFE/PSEPVE copolymer of 1100 equivalent weight. This sandwich was then passed through a thermal laminator supported on a continuous web of a porous release paper with vacuum. The temperature of the laminator was adjusted so that the temperature of the laminate reached 230—235°C at the end of the heated zone. the perfluorocarbon resin fabric was embedded or encapsulated in the TFE/PSEPVE copolymer. The laminate was hydrolyzed as in Example 1 and found to have greatly improved tear resistance over the unreinforced double layer films of Examples 1—2 and Comparative Example A.

A portion of this laminate was evaluated in a laboratory cell as in Example 1. After two days the

performance was 95.2% current efficiency and 3.81 volts, operated at 80°C, 3.1 $KA/m^2$, 200 gpl NaCl in the anolyte and 32±1% NaOH. The anolyte concentration was then reduced to 115 gpl salt in the anolyte to simulate the partial stoppage of brine flow to the anolyte chamber. The cell was operated for an additional 26 days at this high salt depletion and then shut down and the membrane examined. No separation or blisters in the membrane were found.

Example 4

A coextruded double layer film was prepared using the general procedure of Example 3, but with a different type of reinforcing cloth. The cloth consisted of a warp and fill of 7.87 threads per cm (20 threads per inch) of a 220 dtex (200 denier) polytetrafluoroethylene fiber and 15.75 threads per cm (40 threads per inch) of a 55 dtex (50 denier) rayon. In the lamination procedure, a 25 µm film of the 1100 equivalent weight TFE/PSEPVE copolymer was used below the cloth instead of the 50 µm film used in Example 3.

After hydrolysis the laminate was evaluated in a cell under the same conditions as Example 1. After 9 days its performance was 95.3% current efficiency and 3.69 volts. After 11 days the membrane was subjected to a stoppage of the brine feed as in Example 1. The cell was restarted and the laminate continued to perform at 95—96% current efficiency and 3.70 volts. After 30 days the cell was shut down and disassembled. Upon inspection, the membrane appeared to be in perfect condition with no blistering apparent.

Comparative Example B

Separate films of 50 micron TFE/EVE and 100 micron TFE/PSEPVE were pressed together as in Comparative Example A. This composite was then used to prepare a fabric-reinforced laminate as in Example 3. After hydrolysis the performance of the membrane was evaluated in a cell where after 5 days it was performing at 95% current efficiency and 3.9 volts under the conditions of Example 1. This membrane was subjected to a simulated failure of the brine feed system as in Example 1. Upon removal from the cell and inspection, the membrane was found to be extensively blistered with approximately 50% of the area in the active area of the cell covered with liquid-filled pockets or blisters.

**Claims**

1. A process for the preparation of a multilayer cationic ion exchange membrane comprising at least two substantially incompatible melt-fabricable fluorinated polymers, where said first polymer has pendant side chains having sulfonyl functional groups and where said second polymer has pendant side chains having carboxyl functional groups, comprising heating said first polymer which has an equivalent weight in the range of 1000—1200 and said second polymer which has an equivalent weight in the range of 1050—1150 to a temperature above their melting points, coextruding the polymers into a composite film, and cooling the resulting composite to a temperature below the melting points of each of the polymers, and subsequently converting the functional groups of the polymers to ionizable functional groups.

2. A process of Claim 1 wherein two polymers are extruded.

3. A process of Claim 1 wherein the extrusion temperature is maintained at from 260 to 330°C.

4. A process of Claim 1 wherein the multilayer membrane is extruded to a total thickness of from 25 to 250 microns.

5. A process of Claim 4 wherein the multilayer membrane is extruded to a thickness of from 75 to 150 microns.

6. A process of Claim 1 wherein the composite is laminated to a reinforcing web prior to converting the functional groups to ionizable functional groups.

7. A process for the continuous production of alkali metal hydroxide which comprises continuously providing an aqueous alkali metal halide solution to the anode compartment of an electrolytic cell having an anode, a cathode, and a cation exchange membrane separating the anode and the cathode; electrolyzing the solution; and continuously removing alkali metal hydroxide solution, hydrogen, and halogen from the electrolytic cell, wherein the exchange membrane consists essentially of a coextruded cation exchange membrane resulting from the process of Claim 2.

8. An electrolytic cell having an anode, a cathode, and a cation exchange membrane separating the anode and the cathode, wherein the cation exchange membrane consists essentially of a coextruded cation exchange membrane resulting from the process of Claim 2.

9. An electrolytic cell of Claim 8 wherein the gap between the anode and the cathode is no greater than about 3 mm.

10. An electrolytic cell of Claim 9 wherein the cation exchange membrane is in contact with at least one of the anode and cathode.

11. A process of Claim 1 further comprising applying to at least one surface of the multilayered cationic ion exchange membrane a gas- and liquid-permeable porous layer of electrocatalyst composition.

12. A process of Claim 1 further comprising applying to at least one surface of the multilayered cationic ion exchange membrane and gas- and liquid-permeable porous non-electrode layer.

**Patentansprüche**

1. Verfahren zur Herstellung einer Mehrschicht - Kationenaustauscher - Membran, die mindestens zwei im wesentlichen unverträgliche schmelzverarbeitbare fluorierte Polymere enthält, wobei das erste Polymer Seitenketten mit Gruppen von Sulfonylfunktionalität und wobei

das zweite Polymer Seitenketten mit Gruppen von Carboxylfunktionalität hat, bei dem das erste Polymere, das ein Äquivalentgewicht im Bereich von 1000—1200 hat und das zweite Polymere, welches ein Äquivalentgewicht im Bereich von 1050—1150 hat, auf eine Temperatur oberhalb ihrer Schmelzpunkte erhitzt wird, die Polymeren in eine Verbundfolie koextrudiert und die entstandene Verbundstruktur auf eine Temperatur unterhalb der Schmelzpunkte jedes der Polymeren abgekühlt und anschliessend die funktionellen Gruppen der Polymeren in ionisierbare funktionelle Gruppen umgewandelt werden.

2. Verfahren nach Anspruch 1, bei dem zwei Polymere extrudiert werden.

3. Verfahren nach Anspruch 1, bei dem die Extrusionstemperatur bei 260 bis 330°C gehalten wird.

4. Verfahren nach Anspruch 1, bei dem die Mehrschichtmembran auf eine Gesamtdicke von 25 bis 250 Mikrometer extrudiert wird.

5. Verfahren nach Anspruch 4, bei dem die Mehrschichtmembrane auf eine Dicke von 75 bis 150 Mikrometer extrudiert wird.

6. Verfahren nach Anspruch 1, bei dem der Verbundstoff auf ein Verstärkungsgewebe laminiert wird, bevor die funktionellen Gruppen in ionisierbare funktionelle Gruppe umgewandelt werden.

7. Verfahren zur kontinuierlichen Herstellung von Alkalihydroxid, bei dem kontinuierlich eine wässrige Alkalihalogenidlösung der Anodenkammer einer Elektrolysezelle zugeleitet wird, die eine Anode, eine Kathode und eine Kationenaustauschermembrane aufweist, welche Anode und Kathode trennt, die Lösung elektrolysiert und kontinuierlich Alkalihydroxidlösung, Wasserstoff und Halogen aus der Elektrolysezelle abgezogen wird, worin die Austauschermembrane im wesentlichen aus einer coextrudierten Kationenaustauschermembrane besteht, die nach dem Verfahren von Anspruch 2 hergestellt ist.

8. Elektrolysezelle mit Anode, Kathode und Kationenaustauschermembran, die Anode und Kathode trennt, worin die Kationenaustauschermembran im wesentlichen aus einer coextrudierten Kationenaustauschermembran besteht, die nach dem Verfahren von Anspruch 2 hergestellt ist.

9. Elektrolysezelle von Anspruch 8, worin der Abstand zwischen Anode und Kathode nicht grösser als etwa 3 mm ist.

10. Elektrolysezelle von Anspruch 9, worin die Kationenaustauschermembran sich im Kontakt mit mindestens einer Elektrode von Anode und Kathode befindet.

11. Verfahren nach Anspruch 1, bei dem auf mindestens eine Fläche der Mehrschicht-Kationenaustauscher-Membran eine gas- und flüssigkeitspermeable poröse Schicht von Elektrokatalysatorzusammensetzung aufgebracht wird.

12. Verfahren nach Anspruch 1, bei dem auf mindestens eine Fläche der Mehrschicht-Kationenaustauscher-Membran eine gas- und flüssigkeitspermeable poröse Nichtelektrodenschicht aufgebracht wird.

## Revendications

1. Un procédé de préparation d'une membrane échangeuse d'ions cationique multicouches comprenant au moins deux polymères fluorés, façonnables à l'état fondu, substantiellement incompatibles, où ledit premier polymère a des chaînes latérales pendantes ayant des groupes fonctionnels sulfonyle et où ledit deuxième polymère a des chaînes latérales pendantes ayant des groupes fonctionnels carboxyle, selon lequel on chauffe ledit premier polymère qui a un poids équivalent dans la gamme de 1000—1200 et ledit second polymère qui a un poids équivalent situé dans la gamme de 1050—1150 à une température situé au-dessus de leurs points de fusion, on coextrude les polymères en une pellicule composite, et on refroidit le composite résultant à une température inférieure aux points de fusion de chacun des polymères, et on transforme ensuite les groupes fonctionnels des polymères en groupes fonctionnels ionisables.

2. Un procédé selon la revendication 1, dans lequel on extrude deux polymères.

3. Un procédé selon la revendication 1, dans lequel on maintient la température d'extrusion entre 260 et 330°C.

4. Un procédé selon la revendication 1, dans lequel on extrude la membrane multicouches à une épaisseur totale de 25 à 250 micromètres.

5. Un procédé selon la revendication 4, dans lequel on extrude la membrane multicouches à une épaisseur de 75 à 150 micromètres.

6. Un procédé selon la revendication 1, dans lequel on stratifie le composite à un voile de renforcement avant de transformer les groupes fonctionnels en groupes fonctionnels ionisables.

7. Un procédé de production continue d'hydroxyde de métal alcalin selon lequel on amène de façon continue une solution aqueuse d'halogénure de métal alcalin au compartiment anodique d'une cellule électrolytique ayant une anode, une cathode, et une membrane échangeuse de cations séparant l'anode et la cathode; on électrolyse la solution; et on enlève continuellement de la solution d'hydroxyde de métal alcalin, de l'hydrogène et de l'halogène de la cellule électrolytique, la membrane échangeuse consistant essentiellement en une membrane échangeuse de cations coextrudée résultant du procédé de la revendication 2.

8. Une cellule électrolytique ayant une anode, une cathode, et une membrane échangeuse de cations séparant l'anode et la cathode, dans laquelle la membrane échangeuse de cations consiste essentiellement en une membrane échangeuse de cations coextrudée résultant du procédé de la revendication 2.

9. Une cellule électrolytique selon la revendication 8, dans laquelle l'intervalle entre l'anode et la cathode n'est pas supérieur à environ 3 mm.

10. Une cellule électrolytique selon la revendication 9, dans laquelle la membrane échangeuse de cations est en contact avec au moins l'une de l'anode et la cathode.

11. Un procédé selon la revendication 1, dans lequel en outre on applique à au moins une surface de la membrane échangeuse d'ions cationique multicouches une couche poreuse, perméable aux gaz et au liquides, d'une compositions d'électrocatalyseur.

12. Un procédé selon la revendication 1, dans lequel en outre on applique à au moins une surface de la membrane échangeuse d'ions cationique multicouches une couche ne formant pas électrode, poreuse, perméable aux gaz et aux liquides.